# EUROPÄISCHE PATENTSCHRIFT

(11) **EP 0 795 749 B1**
(45) Veröffentlichungstag und Bekanntmachung des Hinweises auf die Patenterteilung: **08.04.2009**
(21) Anmeldenummer: 97103324.6
(22) Anmeldetag: 28.02.1997
(51) Int. Cl.: G01N 27/64

(54) **Photoionisations-Ionenmobilitätsspektrometrie**
Ion mobility spectrometry by means of photoionization
Spectrométrie à mobilité d'ions par photoionisation

(30) Priorität: 12.03.1996 DE 19609582
(43) Veröffentlichungstag der Anmeldung: 17.09.1997
(73) Patentinhaber: Bruker Daltonik GmbH, 28359 Bremen (DE)
(72) Erfinder: Döring, Hans-Rüdiger, 04315 Leipzig (DE); Arnold, Gerd, 04109 Leipzig (DE); Adler, Joachim, 04357 Leipzig (DE); Röbel, Thomas, 04299 Leipzig (DE); Riemenschneider, Jürgen, 04318 Leipzig (DE)

(56) Entgegenhaltungen:
- EP-A- 0 135 747
- US-A- 3 621 239
- US-A- 4 317 995
- US-A- 5 032 721
- US-A- 5 338 931
- EICEMAN G.A.; VANDIVER V.J.: 'Charge-exchange in binary mixtures of polycyclic aromatic hydrocarbons using photoionization-ion mobility spectrometry' ANALYTICAL CHEMISTRY Bd. 58, Nr. 11, 11 September 1986, Seiten 2331 - 2335

## Beschreibung

Die Erfindung betrifft ein Verfahren zum Nachweis von Gasspuren in Luft mit Hilfe eines Photoionisations-Ionenmobilitätsspektrometers, wobei ein Probengas in eine Photoionisationskammer geleitet wird und die in dem Probengas vorhandenen Probenmoleküle durch die VUV-Strahlung einer Lampe ionisiert werden und wobei diese Ionisierung durch Zugabe eines Reagenzgases verstärkt wird.

Ein solches Verfahren ist bekannt aus der US-Patentschrift 5,338,931.

Ionenmobilitätsspektrometer arbeiten ähnlich wie Flugzeitmassenspektrometer, allerdings nicht unter Vakuum sondern bei Atmosphärendruck.

Ionenmobilitätsspektrometer (IMS) werden u.a. verwendet, um die Anwesenheit von Materialien in einer Umgebung, z.B. von Schadstoffen in Atmosphärenluft, zu detektieren. Die Möglichkeiten reichen von einer reinen Alarmfunktion bei Anwesenheit eines bekannten Schadstoffes, z.B. eines chemischen Kampfstoffs, über die Identifikation eines unbekannten Stoffes bis zur quantitativen Konzentrationsbestimmung.

Typische IMS besitzen eine Ionisationsquelle, eine Reaktionszelle, eine Driftzelle, z.B. in Form einer Röhre, ein Eintrittsgitter zwischen dem Reaktions- und dem Driftbereich und einen Ionendetektor. Die Spektrometer arbeiten bei Atmosphärendruck, wo die mittlere freie Weglänge der Gasmoleküle in der Driftzelle klein gegen deren Abmessungen ist. Übicherweise wird zusammen mit dem Probengas oder -dampf ein Trägergas, i.a. trockene Luft, in das Spektrometer eingebracht. Das die Probe enthaltende Trägergas wird über einen Einlaß auf die Ionisationsquelle gegeben, was dazu führt, daß Trägergas- und Probenmoleküle teilweise ionisiert werden. Die Ionisationsquelle besteht üblicherweise aus 241-Am oder 63-Ni. Durch Stöße wird zusätzlich Ladung von Molekülen des Trägergases auf Probenmoleküle übertragen, bzw. es bilden sich Quasimolekülionen. In Reaktionsbereich liegt i.a. ein elektrischer Potentialgradient vor, so daß die geladene Mischung auf das Injektionsgitter hin bewegt wird. Dieses ist elektrisch geladen und sperrt normalerweise den Durchlaß zur Driftzelle. Periodisch wird dieses Potential jedoch für kurze Zeit erniedrigt, so daß pulsartig eine Anzahl von Probenionen in die Driftzelle gelangt. Hier liegt ein näherungsweise konstantes elektrisches Driftfeld, d.h. ein konstanter Potentialgradient vor, der die Ionen entlang der Achse der Zelle auf eine Detektorelektrode hin bewegt, die sich am dem Injektionsgitter gegenüberliegenden Ende der Driftzelle befindet und die Ladung der Ionen ansammelt. Die Ankunftszeit der Ionen bezogen auf die pulsartige Öffnung des Injektionsgitters hängt von der Mobilität der detektierten Ionen ab. Leichte Ionen sind beweglicher als schwere und erreichen den Detektor früher. Dieser Effekt wird zur Charakterisierung der Ionen ausgenutzt. Das pulsartige Öffnen des Gitters kann periodisch wiederholt werden um das Signal-zu-Rausch-Verhältnis zu erhöhen bzw. um eine quasi-kontinuierliche Messung durchzuführen.

Die Verwendung einer radioaktiven Ionisationsquelle als Emittent von α- oder β-Strahlen begrenzt die Anwendung auf die Detektion von solchen Schadstoffen, die stark protonenaffin oder elektronegativ sind (das sind i.w. nur die chemischen Kampfstoffe und Sprengstoffe) und stellt insbesondere im nicht-militärischen Bereich ein gewisses Risiko dar.

Deshalb und zur Vergrößerung der analytischen Anwendungsbreite wurden verschiedene Untersuchungen angestellt, um die radioaktiven Ionisationsquellen zu ersetzen. In US 4,839,143 und US 4,928,033 wird die Verwendung von Alkali-Kationen-Emittern als Ionisationsquellen in IMS beschrieben. Mit diesen Quellen ist eine Ionisierung der Probenmoleküle nur in der positiven Betriebsweise des IMS möglich. Dadurch entziehen sich viele elektronegative Schadstoffe der Ionisierung. Außerdem benötigt man zur Erhitzung des Alkali-Emitters auf Temperaturen von 600 °C - 800 °C ein bis mehrere Watt elektrische Leistung.

In der Internationalen Patentanmeldung WO 93/11554 A1 wird eine Korona-EntladungsIonisationsquelle für ein IMS vorgestellt. Auch mit einer solchen Ionisationsquelle sind elektronegative Schadstoffe nicht nachweisbar, da in der Entladung entstehende nitrose Gase sehr stark elektronegativ sind und dadurch ein Ladungstransfer zu den i.a. schwächer elektronegativen Schadstoffmolekülen nicht möglich wird.

Die Verwendung von Vakuum-UV-Licht zur Schadstoffionisierung ist von den Photoionisationsdetektoren (PID) her bekannt, die als Detektoren für die Gaschromatographie oder als nichtselektive Handgeräte eingesetzt werden. Dabei wird das VUV-Licht von Lasern, edelgasgefüllten Nieder- oder Hochdrucklampen, Konstantstrom- und Blitzlampen erzeugt. In der o.g. US 5,338,931 wird eine Blitzlampe als besonders vorteilhaft vorgeschlagen. Zwar gestattet die Bestrahlung mit VUV-Licht die Ionisierung einer Vielzahl von Schadstoffmolekülen, aber immer nur solche, deren Ionisationspotentiale kleiner sind als die Energie hv des Lichts, und auch nur dann, wenn die Schadstoffmoleküle das Licht absorbieren können. So lassen sich z.B. die Moleküle des Treibstoffs 1,1 - Dimethylhydrazin trotz ihres niedrigen Ionisationspotentials von 7,3 eV mit dem Licht einer 10,6 eV-Lampe im ppm-Bereich kaum ionisieren.

Es ist im Zusammenhang mit IMS bekannt, daß die Zugabe eines chemischen Reagenzgases wie Azeton oder Kohlenstoffletrachlorid ins Trägergas die Nachweisselektivität verbessern kann. Die eingangs genannte US 5,338,931 schlägt im Zusammenhang mit der Photoionisation ebenfalls eine solche Zugabe, insbesondere Azeton, vor und beruft sich dabei auf zwei Artikel, nämlich Luczynski and Wincel Int. J. Mass. Spectrometry and Ion Physics, Vol. 23, pp. 37-44 (1977) und Tzeng et al. in J. Am. Soc., Vol. 111, pp 6035-6040 (1989). In diesen Artikeln wird abgeleitet, daß der Ionisierungsprozeß über die Bildung von protonierten Monomeren H⁺(CH₃)₂CO und Dimeren H⁺[(CH₃)₂CO]₂ abläuft.

In US 5,338,931 wird angegeben, daß die Zugabe von Azeton nicht nur die Selektivität sondern auch die Nachweisempfindlichkeit steigert. Es wird behauptet, es sei nicht nötig, daß der Reagenzstoff eine Ionisierungsenergie aufweist, die niedriger als die Photoenenergie ist, da angeregte Reagenzmoleküle gebildet werden könnten, die durch Nachfolgereaktionen ionisiert werden. Wesentlich sei daher ein "effektives" Ionisierungspotential. Ohne weitergehende Erklärungen, insbesondere ohne jedes Beispiel, wird erwähnt, daß die Zugabe eines Reagenzgases die Empfindlichkeit eines IMS im positiven und im negativen Mode verbessern könne.

Beim einzigen in US 5,338,931 explizit beschriebenen Reagenzstoff Azeton läuft die Ionisierung der nachzuweisenden Zielsubstanz über die zwischenzeitliche Bildung von protonierten Dimeren des Azetonmoleküls ab. Die Ladungsübertragung an das Zielmolekül geschieht über das Proton und nicht durch direkte Ionisierung. Die Wirksamkeit des Ladungstransfers hängt demnach entscheidend von den Protonenaffinitäten der beteiligten Moleküle ab, nicht von ihrem Ionisierungspotential. Für das Ablaufen der Reaktion ist es zwingend notwendig, daß die Protonenaffinität des Zielstoffes größer ist als die des Azetons. Der Nachweis von nicht-protonenaffinen Zielstoffen, wie z.B. von einigen Kohlenwasserstoffen und chloriertem Thioäther, wird damit durch die Zugabe von Azeton nicht verstärkt.

Eigene Untersuchungen haben ergeben, daß man in gewissen Grenzen Azeton durch andere protonenaffine Substanzen ersetzen kann wie z.B. Äther, insbesondere Diäthyläther C₂H₅OC₂H₅ ,oder auch durch Ketone, Ester, Alkohole oder Amine. Es besteht aber nach wie vor der Bedarf nach einem Betriebsverfahren eines IMS mit einer VUV-Lampe als nicht-radioaktiver Ionisationsquelle zum Nachweis einer Zielsubstanz in Luft, bei der Selektivität und Nachweisempfindlichkeit durch Zugabe eines Reagenzgases verbessert werden, das auch bei weniger protonenaffinen Zielsubstanzen erfolgreich ist. Vorzugsweise sollte sich durch Auswahl des Reagenzgases das Verfahren für bestimmte Zielsubstanzen optimieren lassen, bzw. Störsubstanzen unterdrückt werden können. Das Verfahren soll möglichst im positiven und im negativen Mode betrieben werden können.

Die Aufgabe wird dadurch gelöst, daß die Reagenzgasmoleküle im spektralen Bereich der VUV-Strahlung einen großen Querschnitt aufweisen für die Bildung von positiven Molekülionen und eine im Verhältnis dazu kleine Wahrscheinlichkeit zur Bildung von protonierten Quasi-Molekülionen.

Dadurch werden bei der Bestrahlung direkt Ionen gebildet und keine protonierten Quasi-Molekülionen, wodurch eine ausreichende Konzentration von Reagenzgasionen gebildet wird und für die weitere Ionisierungsübertragung an die Zielmoleküle die Ionisierungspotentiale und nicht die Protonenaffinitäten entscheidend sind.

Vorzugsweise ist das Ionisierungspotential der Reagenzgasmoleküle gleich oder kleiner als die Energie hv der Lichtquanten der VUV-Strahlung aber größer als das Ionisierungspotential der Probenmoleküle.

Dadurch ist die direkte Ionisierbarkeit der Reagenzgasmoleküle durch das VUV-Licht und der direkte Ladungsübertrag an die Probenmoleküle sichergestellt.

In Ausführungsformen ist das Ionisierungspotential der Reagenzgasmoleküle geringfügig kleiner als hv, was eine besonders effektive Ionisierung durch die VUV-Strahlung gewährleistet.

In anderen Ausführungsformen ist jedoch das Ionisierungspotential wesentlich kleiner als hv, wodurch der Nachweis solcher Störgasmoleküle, deren Ionisationspotentiale zwischen hv und dem Ionisationspotential der Reagenzgasmoleküle liegen, unterdrückt wird.

Das erfindungsgemäße Verfahren ist dann besonders vorteilhaft, wenn die Probengasmoleküle im spektralen Bereich der VUV-Strahlung einen kleinen Absorptionsquerschnitt aufweisen, da in diesem Fall die direkte Ionisierung der Probengasmoleküle praktisch nicht stafflindet und die Verstärkung über die Ionisierung der Reagenzgasmoleküle besonders groß ist.

In bevorzugter Weise erfolgt die Ionisation der Probengasmoleküle dadurch, daß ein direkter Ladungstransfer stattfindet zwischen den positiven Reagenzgasmolekülionen und den Probengasmolekülen, wodurch letztere zu Molekülionen werden, die mit Hilfe des Ionenmobilitätsspektrometers nachgewiesen werden.

Durch Auswahl des Reagenzgases kann dessen Ionisierungspotential an das der Zielsubstanz angepaßt werden. Ist es beispielsweise nur unwesentlich höher, so findet der gewünschte Ladungstransfer statt und darüber hinaus wird der Nachweis von Störgasen mit höherer Ionisierungsenergie "gelöscht", d.h. diese geben, selbst wenn sie durch das VUV-Licht ionisiert waren, ihre Ladung an die Reagenzgasmoleküle weiter.

Die direkte Ionisierung der Reagenzgasmoleküle mit großem Ionisierungsquerschnitt durch das VUV-Licht setzt Elektronen frei, deren Anzahl die der aus metallischen Strukturen der Zelle per Photoeffekt austretenden Elektronen deutlich übertreffen kann, so daß auch der negative Betriebsmodus erheblich verstärkt wird.

Die bei der Ionisierung der Reagenzgasmoleküle abgegebenen Elektronen bilden mit dem Luftsauerstoff O₂⁻-Ionen, die sich an elektronegative Zielsubstanzmoleküle assoziativ oder dissoziativ anlagern und ermöglichen bzw. verstärken auf diese Weise den negativen Betriebsmode des IMS. In einem negativen Betriebsmodus des IMS findet demnach ein Ladungstransfer statt, wobei die bei der Ionisation der Reagenzgasmoleküle gebildeten Elektronen sich zunächst an Luftsauerstoffmoleküle anlagern und anschließend von elektronegativeren Probenmolekülen assoziativ oder dissoziaiv übernommen werden, welche zu negativen Molekülionen werden, die mit Hilfe des Ionenmobilitätsspektrometers nachgewiesen werden.

In bevorzugten Ausführungsformen ist das Reagenzgas ein Kohlenwasserstoff, insbesondere mit Doppelbindungen, vorzugsweise ein Aromat, der eine größere Ionisierungsenergie hat als die Zielsubstanz und der in Luft bei Bestrahlung durch die VUV-Lampe unter Abgabe von Elektronen ionisiert aber nicht oder nur zu einem vernachlässigbar kleinen Anteil protoniert wird.

Auf diese Weise werden zunächst durch das VUV-Licht Kohlenwasserstoffmoleküle positiv ionisiert. Da sie einen guten Ionisierungsquerschnitt und ein höheres Ionisierungspotential als die Zielmoleküle haben, geben sie ihre Ladung an diese direkt weiter. Entscheidend bei diesem Prozeß ist die Differenz der Ionisierungspotentiale, nicht die der Protonenaffinitäten.

Als besonders vorteilhaft haben sich in Versuchen die Reagenzgase Benzol, Toluol und Xylol erwiesen. Sie weisen gute Ionisierungsquerschnitte auf, sind mit ihren Ionisierungspotentialen an die Spektralbereiche gängiger VUV-Lampen und an die Potentiale von im militärischen und nicht-militärischen Bereich interessierenden Zielstoffen gut angepaßt, insbesondere auch an diejenigen, die geringe Protonenaffinitäten aufweisen, und sie zeigen auch im negativen Betriebsmodus überzeugende Verstärkungen von Selektivität und Empfindlichkeit.

Es ist daher besonders bevorzugt, wenn das Reagenzgas einen dieser drei Stoffe enthält. In bevorzugter Weise erfolgt die Zugabe des Reagenzgases zusammen mit dem Probengas und nicht wie im Stand der Technik mit dem Trägergas des Spektrometers.

Dies hat den Vorteil der größeren Variabilität. Das Spektrometer kann leicht mit oder ohne Reagenzgas und auch mit verschiedenen Reagenzgasen betrieben werden. Die Anwesenheit des Reagenzgases im Trägergas wurde eine dauernde Belastung der Kreislauffilter bedeuten. Beim Wechseln des Reagenzgases mußte der hermetische Kreislauf geöffnet werden, was durch die eindringende Luftfeuchtigkeit ebenfalls eine große Belastung für die Filter bedeutet.

Zur Durchführung des Verfahrens wird in den Ionisationsraum des IMS ein Reagenzgas R gegeben, das dort durch das VUV-Licht der Lampe ionisiert wird. Somit entstehen positive Ionen R⁺ und Elektronen e⁻, die von Luftsauerstoff angelagert werden, d.h. es bilden sich negative Ionen der Art (H₂O)ₙO₂⁻. Diese beiden Ionenarten stellen ionisierende Stoßpartner für die nachzuweisenden Schadstoffmoleküle dar.

In der positiven Polung des IMS erfolgt die Ionisierung der Schadstoffmoleküle M i.a. gemäß M + hν → M⁺ + e⁻. Diese Reaktion setzt aber voraus, daß das Molekül M das VUV-Licht der Lampe absorbieren kann. Sollte das jedoch nicht oder nur geringfügig möglich sein, wenn das Molekül M dafür nicht die geeignete Struktur besitzt, dann kann die Ionisation der Schadstoffmoleküle M auch indirekt über den Stoß mit den Reagenzgasmolekülionen R⁺ erfolgen gemäß R⁺ + M → R + M⁺. Voraussetzung dafür ist, daß das Ionisierungspotential des Schadstoffmoleküls kleiner oder gleich dem des Reagenzgasmoleküls ist. Über die Höhe des Ionisierungspotentials der Reagenzgasmoleküle kann der Umfang der nachzuweisenden Schadstoffe festgelegt werden: Solche Schadstoffe, deren Ionisierungspotential zwischen der Lichtquantenenergie hv und dem Potential des Reagenzgasmoleküls liegen, werden zwar durch das Licht ionisiert, aber von den Reagenzgasmolekülen wieder neutralisiert und somit einer Detektion entzogen.

In der negativen Polung des IMS sind zwei Wege der Ionisierung der Schadstoffmoleküle, die nun mit (AB) abgekürzt sind, möglich:

(H₂O)ₙO₂⁻ + (AB) → (AB)O₂⁻ + nH₂O "assoziativ"

(H₂O)ₙO₂⁻ + (AB) → A⁻ +B⁻ + O₂ + nH₂O "dissoziativ"

Diese Reaktionen laufen auch dann ab, wenn das Ionisierungspotential der Schadstoffmoleküle größer ist als die Lichtquantenenergie und/oder wenn die Schadstoffmoleküle das Licht der VUV-Lampe direkt nicht oder kaum absorbieren können.

Das erfindungsgemäße Verfahren kann auch mit Verfahren aus dem Stand der Technik kombiniert werden, insbesondere kann der Nachweis protonenaffiner Zielstoffe wie üblich, z.B. mit Zusatz von Azeton, erfolgen, der Nachweis von Stoffen mit geringer Protonenaffinität und/oder starker Elektronegativität mit dem erfindungsgemäßen Verfahren.

Weitere Vorteile der Erfindung ergeben sich aus der Beschreibung und der beigefügten Zeichnung. Ebenso können die vorstehend genannten und die noch weiter ausgeführten Merkmale erfindungsgemäß jeweils einzeln für sich oder zu mehreren in beliebigen Kombinationen Anwendung finden. Die beschriebenen Ausführungsformen sind nicht als abschließende Aufzählung zu verstehen, sondern haben vielmehr beispielhaften Charakter.

Die Erfindung ist in der Zeichnung dargestellt und wird anhand konkreter Ausführungsbeispiele näher beschrieben und erläutert. Es zeigen:
- Fig. 1: ein Gasfluß- und Stromlaufplan eines Photo-Ionisations-IMS zur Durchführung des erfindungsgemäßen Verfahrens;
- Fig. 2a: Photoionisations-IMS-Spektrum (positive Betriebsart) von 1,5 ppm des Hautkampfstoffs Schwefel-Lost in Luft ohne Reagenzgaszuspülung;
- Fig. 2b: Photoionisations-IMS-Spektrum (positive Betriebsart) von 1,5 ppm des Hautkampfstoffs Schwefel-Lost in Luft mit Zuspülung von ca. 250 ppm des Reagenzgases Azeton;
- Fig. 2c: Photoionisations-IMS-Spektrum (positive Betriebsart) von 1,5 ppm des Hautkampfstoffs Schwefel-Lost in Luft mit Zuspülung von 300 ppm des Reagenzgases Benzol;
- Fig. 3a: Photoionisations-IMS-Spektrum (negative Betriebsart) von 2 ppm Chlorpikrin (Cl₃CNO₂) in Luft ohne Zuspülung eines Reagenzgases;
- Fig. 3b: Photoionisations-IMS-Spektrum (negative Betriebsart) von 2 ppm Chlorpikrin (Trichlornitromethan) in Luft mit Zuspülung von ca. 300 ppm des Reagenzgases Benzol;
- Fig. 4: Photoionisations-IMS-Spektrum (negative Betriebsart) von 2 ppm Chlor in Luft mit Zuspülung von ca. 250 ppm des Reagenzgases Benzol;
- Fig. 5: Schnitt durch eine Zuspülvorrichtung für Reagenzgase zum Probengas;
- Fig.6: Schnitt durch ein Ausführungsbeispiel eines Photoionisations-IMS, das zur Durchführung des erfindungsgemäßen Verfahrens eingerichtet ist.

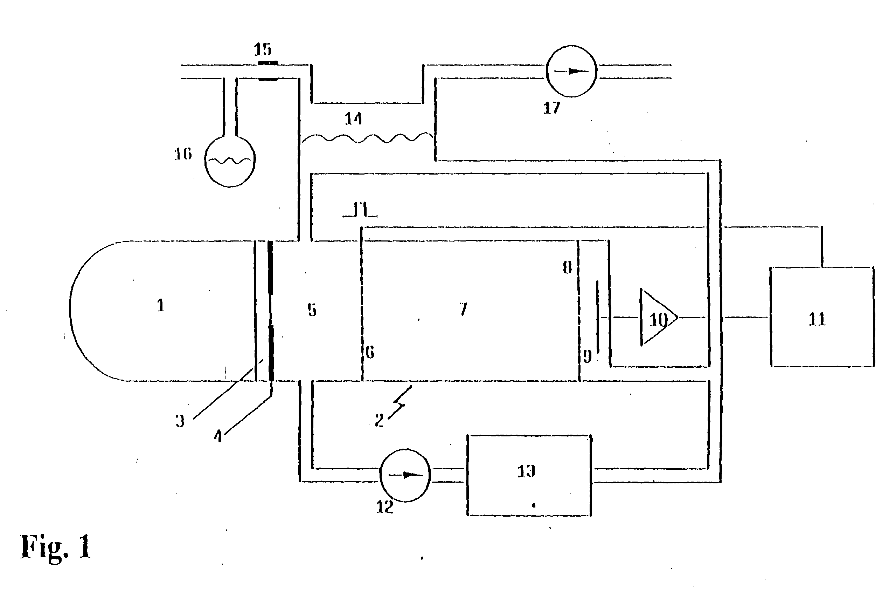

Fig. 1 zeigt den schematischen Aufbau eines Ausführungsbeispiels eines Photoionisations-Ionenmobilitätsspektro-meters zur Durchführung des erfindungsgemäßen Verfahrens. Die gleichstrombetriebene VUV-Lampe 1 ist axial an der Meßzelle 2 des IMS befestigt. Ihr wirksamer Spektralbereich liegt bei 10 bis 10,6 eV. Das UV-Licht der Lampe 1 tritt durch ein VUV-durchlässiges Fenster 3 aus Magnesiumfluorid, an dem sich eine Hochspannungselektrode 4 befindet, in den Ionisationsraum 5 der Meßzelle 2 ein. Am axial gegenüberliegenden Ende des Ionisationsraums 5 befindet sich ein Ionenschaltgitter 6. Danach schließt sich der Driftraum 7 an, der an seinem axial entfernten Ende ein Schirmgitter 8 und die Ionendetektorelektrode 9 enthält. Diese Elektrode 9 ist mit dem Eingang eines Meßverstärkers 10 elektrisch verbunden. Die Verstärkersignale gelangen in den Micro-Controller 11 und werden dort digitalisiert und verarbeitet. An der Meßzelle 2 befinden sich weiter die Baugruppen Kreislaufpumpe 12 und Kreislauffilter 13 zum Umpumpen des Trägergases sowie das Membran-Einlaßsystem 14 für das Meßgas. Vor dem Einlaßsystem 14 ist im Bereich des Meßluft-Eingangs 15 die Reagenzgasdosierung 16 plaziert, und nach dem Einlaßsystem 14 ist die Meßluftpumpe 17 angeordnet.

Pumpe 17 saugt die Meßluft, die die nachzuweisenden Schadstoffmoleküle enthält, an der Reagenzgasdosierung 16 vorbei, wobei das Reagenzgas, bzw. der Dampf, der Meßluft zugemischt wird, und anschließend durch die Primärseite des Membraneinlaßsystems 14. Durch die Membran des Einlaßsystems 14 permeiert ein Teil der Schadstoff- und Reagenzgasmoleküle in die Sekundärseite des Einlaßsystems 14. Dort werden sie vom Trägergasstrom erfaßt und in den Ionisationsraum 5 transportiert, wo sie durch das VUV-Licht der Lampe 1 ionisiert werden können. Die Pumpe 12 befördert die Luft mit den nichtionisierten Molekülen aus der Meßzelle 2 und drückt sie durch das Filter 13, wo sie gereinigt und getrocknet wird. Am Ausgang des Filters 13 teilt sich der Luftstrom in den Driftgasstrom, der in der Nähe der Elektrode 9 in den Driftraum eintritt, und in den Trägergasstrom, der die Sekundärseite des Membraneinlaßsystems 14 ausspült.

Die im Ionisationsraum 5 gebildeten positiven Schadstoff- und Reagenzgasionen werden von der am Lampenfenster 3 befestigten Hochspannungselektrode 4 in Richtung zum Ionenschaltgitter 6 abgestoßen. Normalerweise ist dieses Gitter 6 für den Ionenstrom undurchlässig, es wird jedoch z.B. alle 30 bis 50 ms für 0,3 ms geöffnet, um eine Wolke von Schadstoff- und Reagenzgasionen in den Driftraum 7 zu lassen. Auf ihrem Weg durch den Driftraum 7 entmischt sich die Ionenwolke. Die leichteren und deshalb schnelleren Ionen gelangen eher zur Elektrode 9 als die schwereren Ionen. Dort neutralisieren sich die Ionen und bewirken im Verstärker 10 ein impulsförmiges Meßsignal, dessen Größe der Anzahl der Ionen und somit der Konzentration von Schadstoff bzw. Reagenzgas in der angesaugten Meßluft entspricht. Die Zeit, die eine Ionenart für das Durchlaufen des Driftraums 7 benötigt, d.h. die sog. Driftzeit, aus der die für die Ionen charakteristischen Größe "Mobilität" berechnet wird, wird durch den Micro-Controller 11 bestimmt, der auch den gesamten Meßvorgang steuert, insbesondere die Hochspannung am Schaltgitter, die Pumpen usw.. Abgesehen von der Zuspülung des Reagenzgases auf der Primärseite des Einlaßsystems 14 ist die grundsätzliche Betriebsweise eines Photoionisations-IMS an sich aus dem Stand der Technik bekannt.

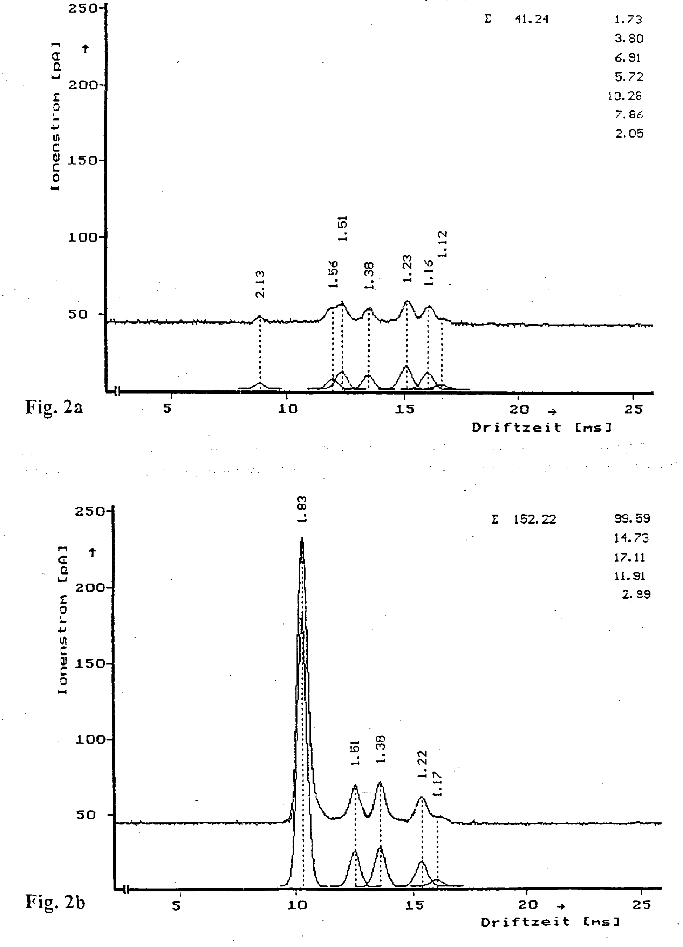

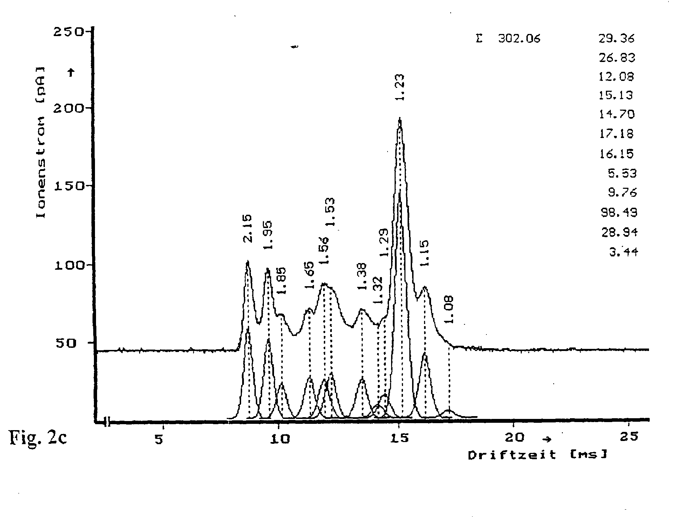

In Fign. 2,3 und 4 sind IMS-Spektren dargestellt, die mit einem Photoionisations-IMS der in Fig. 1 beschriebenen Art gewonnen wurden. Die Abszisse ist die Lauf- bzw. Driftzeitachse und die Ordinate die Meßstromachse. Die Peaks entsprechen den einzelnen im Meßgas vorhandenen Ionenarten unterschiedlicher Mobilität, die im Ionisationsraum 5 gebildet werden und den Driftraum unterschiedlich schnell durchlaufen. Die Zahlen an den Peaks entsprechen den normierten Beweglichkeiten der Ionen in der Dimension cm²/Vs. Die Flächen unter diesen Peaks in absoluten Einheiten sind aufgelistet im rechten oberen Bereich der Spektren-Darstellung, wobei die Zuordnung besteht, daß die oberste Zahl dem von links gesehen ersten Peak entspricht. Die Zahl links neben der Liste stellt die Fläche unter dem gesamten Kurvenzug des Spektrums dar und charakterisiert den totalen Ionenstrom.

Im einzelnen zeigen Fig. 2a bis 2c die Spektren des chemischen Kampfstoffes Schwefel-Lost (HD) in der positiven Betriebsweise des IMS. Die Kampfstoffkonzentration beträgt jeweils 1,5 ppm. In der Probe befinden sich neben dem Wirkstoff Bis-(2-chloräthyl)-thioäther auch noch durchaus charakteristische chemische Stabilisatoren, Begleitsubstanzen aus der technischen Synthese und Hydrolyse-Produkte des Kampfstoffs.

Das Spektrum von Fig. 2a wurde ohne Reagenzgaszumischung gewonnen.

In Fig. 2b bleiben die kampfstoffrelevanten Spurenanteile, das ist die Summe der Flächen der Peaks mit normierten Ionenbeweglichkeiten kleiner als 1,7 cm²/Vs, bei Zugabe von ca. 250 ppm Azeton zum Meßgas gegenüber Fig. 2a nahezu unverändert. Es erscheint nur ein zusätzlicher durch protoniertes Azeton verursachter sehr starker Peak bei 1,83.

In Fig. 2c werden jedoch bei Zumischen von ca. 300 ppm Benzoldampf zur Meßluft die kampfstoffrelevanten Signalanteile etwa sechsmal größer, wodurch die Detektion von Schwefel-Lost bei sublethalen Konzentrationen mit einem Photoionisations-IMS möglich wird.

Die Wirkungslosigkeit der Azeton-Zugabe (Fig. 2b) liegt darin begründet, daß Schwefel-Lost eine Protonenaffinität besitzt, die kleiner ist als die des Reagenzgases Azeton, so daß keine Ionisierung durch Protonentransfer möglich ist und im wesentlichen nur der Effekt auftritt, daß ein großer Azeton-Peak erscheint, die charakteristischen Peaks aber nicht verstärkt werden.

Andererseits ist der Ionisierungsquerschnitt von Benzol bei 9,25 eV recht groß und die Ionisierungsenergie von Benzol ist höher als die von Schwefel-Lost, so daß ein Ladungsübertrag von den Benzolionen zum Kampfstoff und teilweise auch zu den charakteristischen Begleitstoffen erfolgt, d.h. der Benzolpeak im Spektrum verschwindet weitgehend wieder und die charakteristischen Peaks werden entsprechend verstärkt.

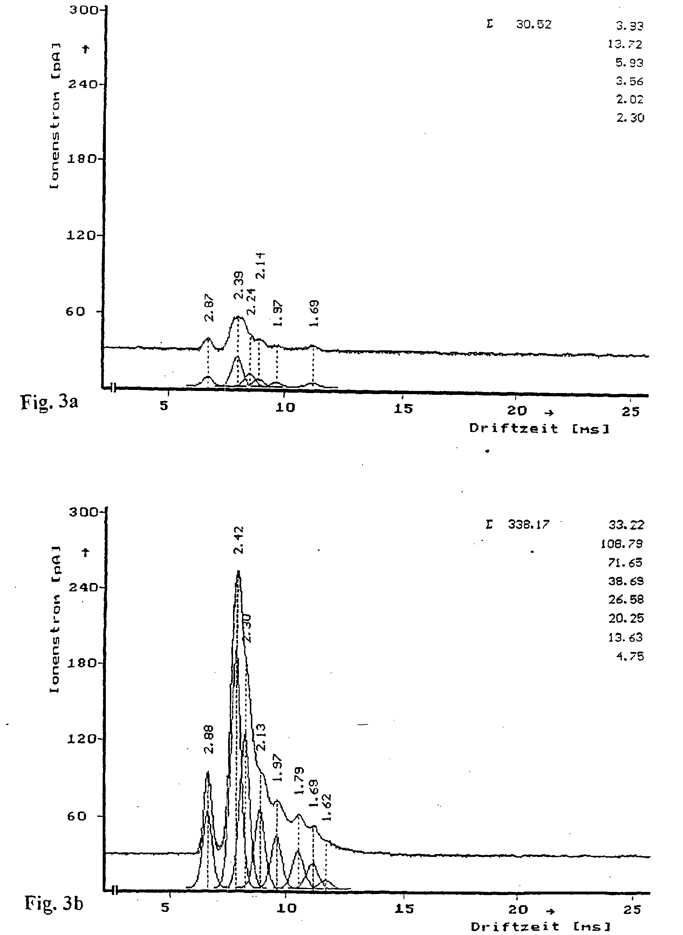

In Fig. 3a und 3b sind die Spektren des Lungen-Kampfstoffes Chlorpikrin (Trichlomitromethan) dargestellt. In der positiven Betriebsart des IMS sind bei dieser Substanz keine Kampfstoffionen festzustellen, auch nicht bei Zumischung eines Reagenzgases wie Azeton- oder Benzoldampf. Dies ist verständlich, da Chlorpikrin nicht protonenaffin, sondern stark elektronegativ ist und ein Ionisierungspotential größer als 11 eV besitzt. Damit kann es weder protoniert noch direkt oder indirekt über Ladungstransfer von einer Reagenzsubstanz mit kleinerer Ionisierungsenergie ionisiert werden.

Die Detektion diese Kampfstoffes gelingt jedoch in der negativen Betriebsweise des IMS. Durch die hohe Elektronegativität der Kampfstoffmoleküle erfolgt ein dissoziativer Ladungstransfer von den wenigen negativen Ionen des Meßgases Luft zu den Kampfstoffmolekülen, wodurch sich Cl⁻-Ionen bilden. Dies ist aus Fig. 3a ersichtlich, wo ca. 2 ppm Chlorpikrin in Luft ohne Reagenzgas gemessen wurden. Die negative Ionisierung des Luftsauerstoffs erfolgt hierbei vorwiegend durch Photoelektronen aus Metallstrukturen (Schaltgitter) der Ionisierungszelle 5, die vom VUV-Licht der Lampe beleuchtet werden.

In Fig. 3b wurden nun dem Meßgas ca. 250 ppm Benzol beigemischt. Man erkennt eine dramatische Verstärkung des charakteristischen Spektrums mit den Peaks bei 2.43, 2.25, usw., die verschiedenen Wasserclustern der O₂⁻-Ions entsprechen, einschließlich des Chlorid-Peaks bei 2.88 cm²/Vs. Die Zumischung und Ionisierung der Reagenzgasmoleküle hat mehr Elektronen erzeugt, die für den assoziativen und dissoziativen Ionisierungsprozeß der Schadstoffmoleküle in der negativen Betriebsart zur Verfügung stehen. Dabei ist der Typ des Reagenzgases an sich von geringerer Bedeutung. Wesentlich ist, daß seine Moleküle möglichst gut vom VUV-Licht ionisiert werden, was vorwiegend vom Grad der Lichtabsorption und vom Ionisierungspotential abhängt. Es hat sich gezeigt, daß in diesem Fall die Aromaten, insbesondere Benzol, Toluol und Xylol, als die effektivsten Reagenzien wirken, wesentlich besser als bspw. Azeton.

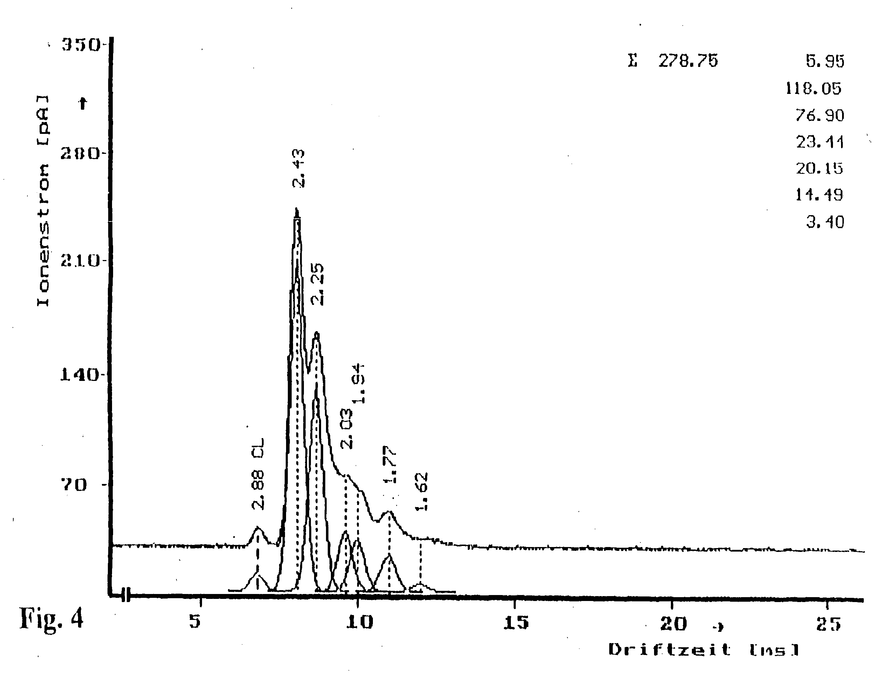

Der gleiche Ionisierungsmechanismus kann auch zur Detektion von Chlor ausgenutzt werden. Die Cl₂-Moleküle besitzen ein Ionisierungspotential von 11,5 eV, sind folglich mit den Lichtquantenenergien von 10 - 10,6 eV der handelsüblichen VUV-Lampen nicht ionisierbar. Fig. 4 zeigt das Spektrum von 2 ppm Chlor bei Zugabe von ca. 250 ppm Benzol, aufgenommen in der negativen Betriebsart des IMS. Der Peak der durch dissoziativen Ladungstransfer entstandenen Chloridionen ist eindeutig bei 2,88 cm²/Vs zu erkennen.

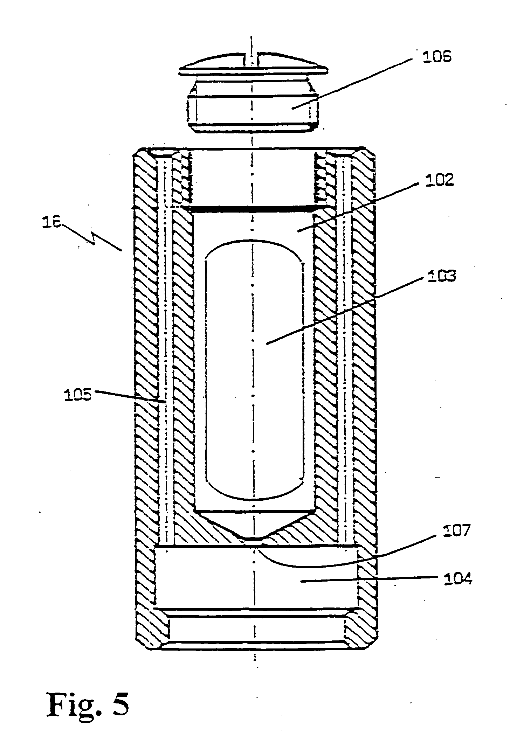

Fig. 5 zeigt im Detail einen Schnitt durch eine Vorrichtung 16 zum Dosieren der Reagenzgase, die eine bevorzugte Ausführungsform der in Fig. 1 schematisch angedeuteten Dosiervorrichtung 16 darstellt.

Die Vorrichtung 16 ist zylindrisch und besteht aus einem Material, das den analytischen Anforderungen bzgl. Adsorption und Desorption von Gasspuren entspricht, z.B. aus Stahl oder hochwertigen Kunststoffen. Sie beinhaltet einen ersten Hohlraum 102 zur Aufnahme eines Reagenzbehälters 103, einen zweiten Hohlraum 104 zur Vermischung des Reagenzdampfes mit der Meßluft und einen oder mehrere Kanäle 105 zwischen der vorderen Stirnseite und dem zweiten Hohlraum 104.

Das für den Betrieb des Photoionisations-IMS ausgewählte Reagenz wird in den Reagenzbehälter 103 eingeschlossen, dessen Wände aus polymerem Material bestehen oder der mindestens ein Fenster aus einem solchen Material besitzt. Durch dieses Material permeieren die Reagenz-Moleküle in den Hohlraum 102. Das eine Ende des Hohlraums 102 ist abgedichtet durch den Verschluß 106, am anderen Ende befindet sich ein Durchlaß in Form einer Bohrung 107 zum Hohlraum 104.

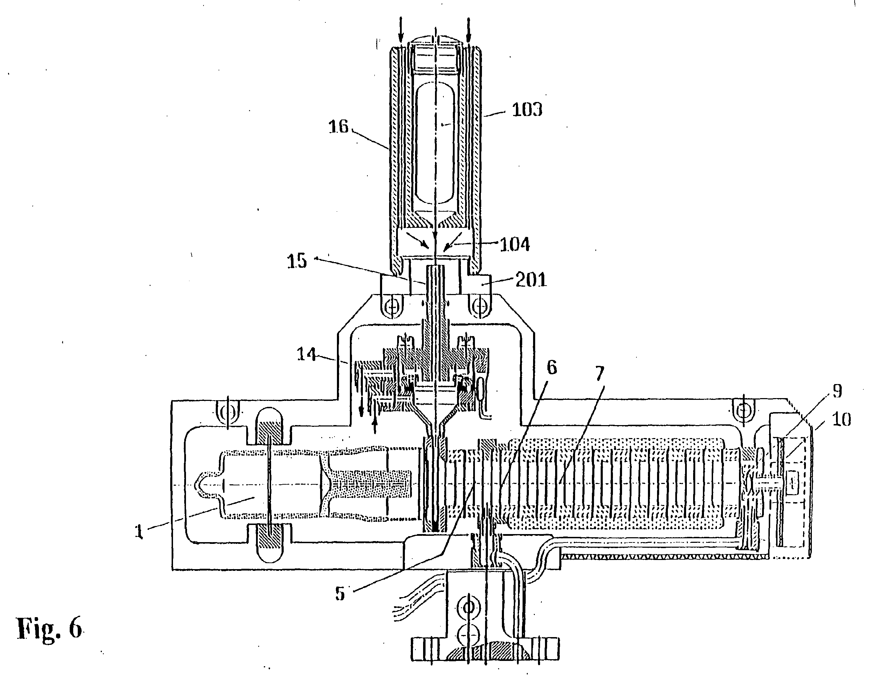

Die Meßluft, die von einer Pumpe (Pumpe 17 in Fig. 1) angesaugt wird, strömt durch die Kanäle 105 in den Hohlraum 104, in den auch aus dem Hohlraum 102 die Reagenzgasmoleküle durch die Bohrung 107 diffundieren, so daß sie sich im Raum 104 mit der Meßluft vermischen. Von dort gelangt das Meßluft-Reagenzgas-Gemisch in die Primärseite des Membraneinlaßsystems (14 in Fign. 1 und 6).

Fig. 6 zeigt die Anordnung der Dosiervorrichtung 16 am Meßlufteingang 15 eines Photoionisations-IMS. Identische und gleichwirkende Komponenten der Fign. 5 und 6 bzw. 1 und 6 sind mit gleichen Bezugsziffern versehen. Der Ausgang des Hohlraums 104 wird über ein Dichtungselement 201 mit dem Meßlufteingang 15 verbunden. Diese Verbindung ist leicht lösbar gestaltet, so daß ein schneller Austausch der Dosiervorrichtung 16 möglich wird, folglich die Anwendungsbreite des hier beschriebenen Photoionisations-IMS auf einfache Art vergrößert wird. Die Dosiervorrichtung 16 kann elektrisch beheizt werden.

Es versteht sich, daß die in Verbindung mit den Fign. 5 und 6 offenbarten Merkmale nicht auf das Ausführungsbeispiel beschränkt sind, sondern einzeln oder in Kombination auch in anderen Ausführungsformen der Erfindung Anwendung finden können.

## Patentansprüche

1. Verfahren zum Nachweis von Schadstoffen und chemischen Kampfstoffen in Luft mit Hilfe eines Photoionisations-Ionenmobilitätsspektrometers, wobei ein Probengas in eine Photoionisationskammer geleitet wird und die in dem Probengas vorhandenen Probenmoleküle durch die VUV-Strahlung einer Lampe ionisiert werden und wobei diese Ionisierung durch Zugabe eines Reagenzgases verstärkt wird,
**dadurch gekennzeichnet, daß** die Reagenzgasmoleküle bromate sind.

2. Verfahren nach Anspruch 1, **dadurch gekennzeichnet, daß** das Ionisierungspotential der Reagenzgasmoleküle gleich oder kleiner als die Energie hv der Lichtquanten der VUV-Strahlung ist, aber größer als das Ionisierungspotential der Probenmoleküle.

3. Verfahren nach einem der vorangehenden Ansprüche, **dadurch gekennzeichnet, daß** die Probengasmoleküle im spektralen Bereich der VUV-Strahlung einen kleinen Absorptionsquerschnitt aufweisen.

4. Verfahren nach einem der vorangehenden Ansprüche, **dadurch gekennzeichnet, daß** die Ionisation der Probengasmoleküle **dadurch** erfolgt, daß ein Ladungstransfer stattfindet zwischen den positiven Reagenzgasmolekülionen und den Probengasmolekülen, wodurch letztere zu positiven Molekülionen werden, die mit Hilfe des lonenmobilitätsspektrometers in einer positiven Betriebsart nachgewiesen werden.

5. Verfahren nach einem der vorangehenden Ansprüche, **dadurch gekennzeichnet, daß** ein Ladungstransfer stattfindet, wobei die bei der Ionisation der Reagenzgasmoleküle gebildeten Elektronen sich zunächst an Luftsauerstoffmoleküle anlagern und anschließend von elektronegativeren Probenmolekülen assoziativ oder dissoziaiv übernommen werden, wodurch letztere zu negativen Molekülionen werden, die mit Hilfe des lonenmobilitätsspektrometers in einer negativen Betriebsart nachgewiesen werden.

6. Verfahren nach Anpruch 1, **dadurch gekennzeichnet, daß** das Reagenzgas einen der Bestandteile Benzol, Toluol oder Xylol enthält.

7. Verfahren nach einem der vorangehenden Ansprüche, **dadurch gekennzeichnet, daß** die Zugabe des Reagenzgases zusammen mit dem Probengas erfolgt.

## Claims

1. Method for the detection of pollutants and chemical warfare agents in air by a photoionization ion mobility spectrometer, whereby a sample gas is led into a photoionization chamber and the sample molecules present in the sample gas are ionized by the VUV radiation of a light source and where this ionization is amplified by the addition of a reactant gas, wherein the reactant gas molecules are aromatic compounds.

2. The method according to claim 1, wherein the ionization potential of the reactant gas molecules is the same or less than the energy hv of the light quanta of the VUV radiation, but greater than the ionization potential of the sample molecules.

3. The method according to one of the preceding claims, wherein the sample gas molecules have a small absorption cross-section in the spectral region of the VUV radiation.

4. The method according to one of the preceding claims, wherein the ionization of the sample gas molecules is achieved by a charge transfer between the positive reactant gas molecules and the sample gas molecules, the latter becoming positive molecular ions which are detected with the aid of the ion mobility spectrometer in a positive mode of operation.

5. The method according to one of the preceding claims, wherein a charge transfer takes place in which the electrons formed by the ionization of the reactant gas molecules initially attach themselves to oxygen molecules from the air and are subsequently taken on by electro-negative sample molecules in an associative or dissociative way, the latter becoming negative molecular ions, which are detected by the ion mobility spectrometer in a negative mode of operation.

6. The method according to claim 1, wherein the reactant gas comprises benzene, toluene or xylene as one of its constituents.

7. The method according to one of the preceding claims, wherein the reactant gas is added together with the sample gas.

## Revendications

1. Procédé de détection de matières polluantes et d'agents chimiques de combat dans l'air à l'aide d'un spectromètre de mobilité photoionique, un gaz test étant dirigé dans une chambre de photoionisation et les molécules test présentes dans le gaz test étant ionisées par le rayonnement VUV d'une lampe, et cette ionisation étant renforcée par l'addition d'un gaz réactif, **caractérisé en ce que** les molécules de gaz réactif sont des composés aromatiques.

2. Procédé selon la revendication 1, **caractérisé en ce que** le potentiel de ionisation des molécules de gaz réactif est identique ou inférieur à l'énergie hv des quanta de lumière du rayonnement VUV, mais supérieur au potentiel de ionisation des molécules test.

3. Procédé selon une des revendications précédentes, **caractérisé en ce que** les molécules de gaz test présentent dans le domaine spectral du rayonnement VUV une section d'absorption réduite.

4. Procédé selon une des revendications précédentes, **caractérisé en ce que** l'ionisation des molécules de gaz test se déroule de telle sorte qu'un transfert de charge a lieu entre les ions moléculaires positifs de gaz réactif et les molécules de gaz test, ces dernières se transformant en ions moléculaires positifs qui sont détectés dans un mode opératoire positif à l'aide du spectromètre de mobilité ionique.

5. Procédé selon une des revendications précédentes, **caractérisé en ce qu'**un transfert de charge a lieu, les électrons formés lors de l'ionisation des molécules de gaz réactif se déposant tout d'abord sur les molécules d'oxygène atmosphérique, puis étant prises en charge de manière associative ou dissociative par les molécules test électronégatives, ces dernières se transformant en ions moléculaires négatifs qui sont détectés à l'aide d'un spectromètre de mobilité ionique dans un mode opératoire négatif.

6. Procédé selon la revendication 1, **caractérisé en ce que** le gaz réactif contient un des composants benzène, toluène ou xylène.

7. Procédé selon une des revendications précédentes, **caractérisé en ce que** le gaz réactif est ajouté au gaz test.
